# EUROPEAN PATENT APPLICATION

(11) **EP 4 723 508 A2**
(43) Date of publication of application: **08.04.2026**
(21) Application number: 25206020.7
(22) Date of filing: 01.10.2025
(51) Int. Cl.: H04B 7/06

(54) **RETRANSMISSION SCHEMES FOR USER EQUIPMENT-INITIATED AND EVENT-DRIVEN BEAM REPORTING**

(30) Priority: 04.10.2024 US 202463703433 P; 25.09.2025 US 202519339907
(71) Applicant: Samsung Electronics Co., Ltd., Suwon-si, Gyeonggi-do 16677 (KR)
(72) Inventor: SHAHMOHAMMADIAN, Hoda, San Jose, CA, 95134 (US); BAE, Jung Hyun, San Jose, CA, 95134 (US)
(74) Representative: Kuhnen & Wacker Patent- und Rechtsanwaltsbüro PartG mbB

(57) **Abstract**

A system and a method are disclosed for beam reporting. The system can include a user equipment, UE, (202) comprising a radio and a processing circuit, and configured to: perform a UE-initiated beam reporting procedure comprising: transmitting, via the radio, a beam reporting indication message (206) in a first channel to initiate beam reporting; and transmitting, via the radio, a beam report (208) in a second channel; infer a communication failure of the UE-initiated beam reporting procedure; and in response to inferring the communication failure of the UE-initiated beam reporting procedure, retransmit at least one of the beam reporting indication message (206) in the first channel or the beam report (208) in the second channel.

## Description

### TECHNICAL FIELD

The disclosure generally relates to new radio (NR) networks. More particularly, the subject matter disclosed herein relates to improvements to user equipment (UE)-initiated (UEI) beam reporting.

### SUMMARY

In NR networks, downlink (DL) beam management procedures require extensive exchange of communication between the base station and UE. In addition, large uplink (DL) reporting and control signaling overhead and high latency are also drawbacks of traditional beam management procedures. Moreover, the UE may possess superior information about beam quality variation.

Accordingly, UEI beam management procedures have been developed, which enable a UE to trigger beam reporting without the network configuration and/or triggering. Such schemes can provide more timely beam reports, even while also providing reduced reporting and signaling overhead. Such UEI beam management procedures can operate in a Mode A, in which the base station (e.g., gNodeB or gNB) can dynamically schedule UL control information (UCI), or a Mode B, in which UCI can be in one or more pre-configured resources for the second UL channel.

However, because UEI beam management does not address retransmission in the case of transmission failure, for example, caused by interference or poor channel quality, many methods of UEI beam reporting may lack a facility to correct the failure. Accordingly, to ensure reliable UEI/event-driven (ED) reporting, retransmission is an essential mechanism that should be addressed for both the first and second UL channels of Mode A as well as Mode B of UEI beam reporting.

To address these issues, systems and methods are described herein for retransmission in UEI beam reporting. The disclosed approaches improve on previous methods by providing more timely beam reports, reduced reporting and signaling overhead, and error detection and correction in the case of communication failure.

In an embodiment, a method comprises performing, by a UE, a UE-initiated beam reporting procedure comprising: transmitting, via a radio, a beam reporting indication message in a first channel to initiate beam reporting; transmitting, via the radio, a beam report in a second channel; inferring a communication failure of the UE-initiated beam reporting procedure; and in response to inferring the communication failure of the UE-initiated beam reporting procedure, retransmitting, by the UE, at least one of the beam reporting indication message in the first channel or the beam report in the second channel.

In an embodiment, a UE includes a radio and a processing circuit. The UE is configured to: perform a UE-initiated beam reporting procedure comprising: transmitting, via the radio, a beam reporting indication message in a first channel to initiate beam reporting; and transmitting, via the radio, a beam report in a second channel; infer a communication failure of the UE-initiated beam reporting procedure; and in response to inferring the communication failure of the UE-initiated beam reporting procedure, retransmit at least one of the beam reporting indication message in the first channel or the beam report in the second channel.

### BRIEF DESCRIPTION OF THE DRAWING

In the following section, the aspects of the subject matter disclosed herein will be described with reference to exemplary embodiments illustrated in the figures, in which:
FIG. 1 is a communication flow diagram illustrating a method of UEI beam reporting.
FIG. 2A is a communication flow diagram illustrating a method of retransmission in UEI beam reporting, according to an embodiment.
FIG. 2B is a communication flow diagram illustrating a method of retransmission based on explicit non-acknowledgement (NACK) in UEI beam reporting, according to an embodiment.
FIG. 2C is a communication flow diagram illustrating a method of retransmission based on DL control information (DCI) in UEI beam reporting, according to an embodiment.
FIG. 2D is a communication flow diagram illustrating a method of retransmission based on an unreceived message in UEI beam reporting, according to an embodiment.
FIG. 3 is a communication flow diagram illustrating a method of retransmission based on channel quality information in UEI beam reporting, according to an embodiment.
FIG. 4 is a flow diagram illustrating a method of retransmission in UEI beam reporting, according to an embodiment.
FIG. 5 is a block diagram of an electronic device in a network environment, according to an embodiment.
FIG. 6 shows a system including a UE and a gNB in communication with each other.

### DETAILED DESCRIPTION

In the following detailed description, numerous specific details are set forth in order to provide a thorough understanding of the disclosure. It will be understood, however, by those skilled in the art that the disclosed aspects may be practiced without these specific details. In other instances, well-known methods, procedures, components and circuits have not been described in detail to not obscure the subject matter disclosed herein.

Reference throughout this specification to "one embodiment" or "an embodiment" means that a particular feature, structure, or characteristic described in connection with the embodiment may be included in at least one embodiment disclosed herein. Thus, the appearances of the phrases "in one embodiment" or "in an embodiment" or "according to one embodiment" (or other phrases having similar import) in various places throughout this specification may not necessarily all be referring to the same embodiment. Furthermore, the particular features, structures or characteristics may be combined in any suitable manner in one or more embodiments. In this regard, as used herein, the word "exemplary" means "serving as an example, instance, or illustration." Any embodiment described herein as "exemplary" is not to be construed as necessarily preferred or advantageous over other embodiments. Additionally, the particular features, structures, or characteristics may be combined in any suitable manner in one or more embodiments. Also, depending on the context of discussion herein, a singular term may include the corresponding plural forms and a plural term may include the corresponding singular form. Similarly, a hyphenated term (e.g., "two-dimensional," "pre-determined," "pixel-specific," etc.) may be occasionally interchangeably used with a corresponding non-hyphenated version (e.g., "two dimensional," "predetermined," "pixel specific," etc.), and a capitalized entry (e.g., "Counter Clock," "Row Select," "PIXOUT," etc.) may be interchangeably used with a corresponding non-capitalized version (e.g., "counter clock," "row select," "pixout," etc.). Such occasional interchangeable uses shall not be considered inconsistent with each other.

Also, depending on the context of discussion herein, a singular term may include the corresponding plural forms and a plural term may include the corresponding singular form. It is further noted that various figures (including component diagrams) shown and discussed herein are for illustrative purpose only, and are not drawn to scale. For example, the dimensions of some of the elements may be exaggerated relative to other elements for clarity. Further, if considered appropriate, reference numerals have been repeated among the figures to indicate corresponding and/or analogous elements.

The terminology used herein is for the purpose of describing some example embodiments only and is not intended to be limiting of the claimed subject matter. As used herein, the singular forms "a," "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, elements, components, and/or groups thereof.

It will be understood that when an element or layer is referred to as being on, "connected to" or "coupled to" another element or layer, it can be directly on, connected or coupled to the other element or layer or intervening elements or layers may be present. In contrast, when an element is referred to as being "directly on," "directly connected to" or "directly coupled to" another element or layer, there are no intervening elements or layers present. Like numerals refer to like elements throughout. As used herein, the term "and/or" includes any and all combinations of one or more of the associated listed items.

The terms "first," "second," etc., as used herein, are used as labels for nouns that they precede, and do not imply any type of ordering (e.g., spatial, temporal, logical, etc.) unless explicitly defined as such. Furthermore, the same reference numerals may be used across two or more figures to refer to parts, components, blocks, circuits, units, or modules having the same or similar functionality. Such usage is, however, for simplicity of illustration and ease of discussion only; it does not imply that the construction or architectural details of such components or units are the same across all embodiments or such commonly-referenced parts/modules are the only way to implement some of the example embodiments disclosed herein.

Unless otherwise defined, all terms (including technical and scientific terms) used herein have the same meaning as commonly understood by one of ordinary skill in the art to which this subject matter belongs. It will be further understood that terms, such as those defined in commonly used dictionaries, should be interpreted as having a meaning that is consistent with their meaning in the context of the relevant art and will not be interpreted in an idealized or overly formal sense unless expressly so defined herein.

As used herein, the term "module" refers to any combination of software, firmware and/or hardware configured to provide the functionality described herein in connection with a module. For example, software may be embodied as a software package, code and/or instruction set or instructions, and the term "hardware," as used in any implementation described herein, may include, for example, singly or in any combination, an assembly, hardwired circuitry, programmable circuitry, state machine circuitry, and/or firmware that stores instructions executed by programmable circuitry. The modules may, collectively or individually, be embodied as circuitry that forms part of a larger system, for example, but not limited to, an integrated circuit (IC), system on-a-chip (SoC), an assembly, and so forth.

In NR networks, there are two procedures related to DL beam management. The first one is to establish the DL beams between a gNB and UE which relies on sweeping different reference signals (RSs) at different stages and reporting the corresponding measurement at some stages. The second one is to maintain the established beams and called beam failure recovery procedures. Both procedures require extensive exchange of communication between the gNB and UE. The disclosed embodiments can reduce the number of transmitted RSs and/or reported measurements.

Beam management procedures are typically based on a particular network configuration and activation. In order to expeditiously acquire the best (e.g., preferred) beam provided by a base station (e.g., a gNB), periodic, semi-persistent and/or aperiodic beam reporting may be activated or triggered. For example, a number N of best beams and their corresponding layer 1 (L1)-reference signal received power (RSRPs) can be reported by a UE.

Some drawbacks of such a legacy beam management procedure are large UL reporting and control signaling overhead as well as high latency. Additionally, a UE may possess superior information about beam quality variation. Accordingly, there is a need for a UEI beam management procedure where a UE can trigger beam reporting without the network configuration and/or triggering. Such a UEI scheme can lead to more timely beam reports with reduced reporting and signaling overhead. Still, UEI beam management may have the drawback that it does not specify a way to handle failed transmissions.

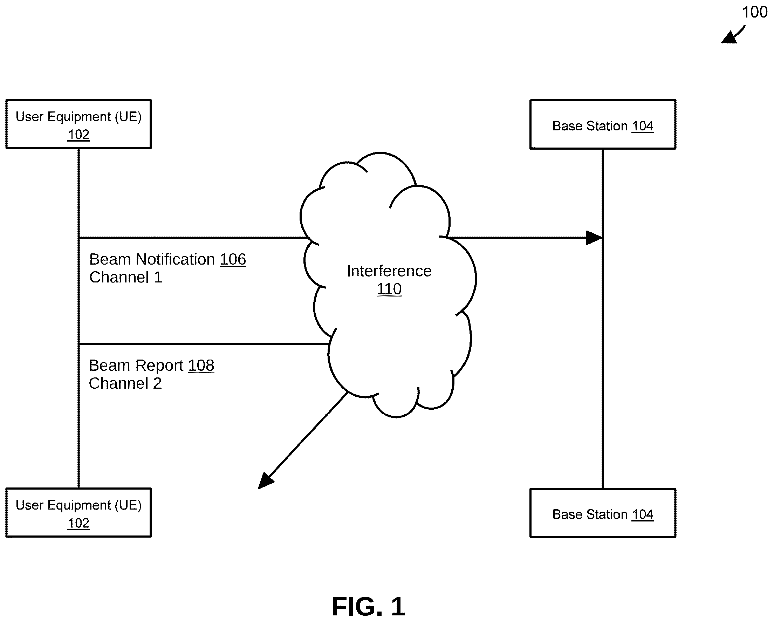

FIG. 1 is a communication flow diagram illustrating a method 100 of UEI beam reporting for a UE 102 in communication with a base station (e.g., gNB) 104 serving the local cell of a mobile network. As described above, UEI beam reporting can provide advantages such as more timely beam reports, with reduced reporting and signaling overhead.

The UEI beam management procedure 100 can operate in a Mode A or a Mode B. In Mode A of operation, the base station 104 can dynamically schedule UCI, whereas in Mode B, the UCI can be in one or more pre-configured resources for the second UL channel. In Mode A, the transmission (e.g., a beam reporting indication message) 106 in the first UL channel can be a request for dynamic UL resource allocation to carry a beam report 108, while in Mode B, the transmission 106 in the first UL channel can simply notify base station 104 that beam report 108 will be carried in the second UL channel. In both Mode A and Mode B, the first UL channel carries one or more periodic physical UL control channel (PUCCH) resources that are configured by dedicated radio resource control (RRC) signaling. Therefore, the UE 102 can transmit the first UL channel as a UL resource request in Mode A, or as a notification of the subsequent second UL channel in Mode B. The UE can then transmit the second UL channel as the actual beam reporting.

Thus, referring to FIG. 1, UE 102 can first transmit the beam notification message 106 (also referred to as a beam reporting indication message, a notice, an announcement, or a message) to the base station 104 via a first channel. For example, as described above, if the UE 102 operates in Mode A, the beam notification message 106 may be a UL resource request, and if the UE 102 operates in Mode B, the beam notification message 106 may be a notification (e.g., an announcement) of an upcoming beam report in the second UL channel. However, in this example, the first channel may be noisy and may be subject to interference 110.

Next, UE 102 can transmit the beam report 108 to the base station 104 via a second channel. In this example, the second channel may be noisy and may be subject to interference 110. Moreover, interference 110 may cause the transmission of the beam notification message 106 and/or the beam report 108 to fail.

However, because UEI beam management does not address retransmission in the case of failure, the method 100 of UEI beam reporting may lack a facility to correct this failure. Accordingly, to ensure reliable UEI or ED reporting, retransmission should be addressed for both the first and second UL channels of Mode A as well as Mode B. The disclosed embodiments can address this challenge by providing methods for retransmission in UEI beam reporting. For example, according to various embodiments, the UE can infer a communication failure in various ways, and accordingly can retransmit one or more of its previously-transmitted messages to the base station. These approaches can improve on previous methods by providing more timely beam reports, reduced reporting and signaling overhead, and error detection and correction in the case of communication (e.g., transmission or reception) failure.

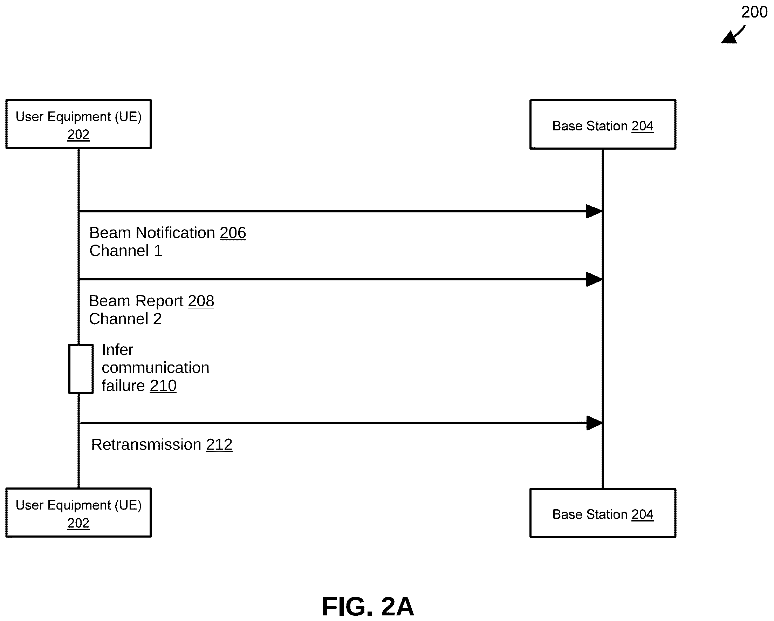

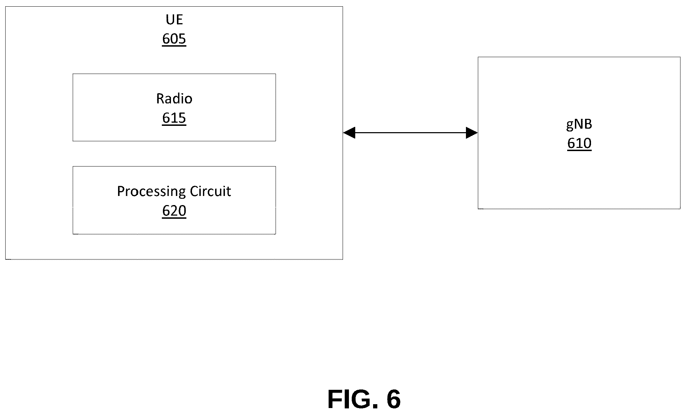

FIG. 2A is a communication flow diagram illustrating a method 200 of retransmission in UEI beam reporting, according to an embodiment. In some embodiments, the method 200 may be performed by a UE 202 in communication with a base station (e.g., gNB) 204 serving the local cell of a mobile network. For example, the UE 202 may correspond to the UE 605 in the example of FIG. 6, and may include a radio and a processing circuit. The base station 204 may correspond to the gNB 610 in FIG. 6.

Referring to FIG. 2A, UE 202 can first transmit the beam notification message 206 (also referred to as a beam reporting indication message, a notice, an announcement, or a message) to the base station 204 via a first channel (e.g., a first UL channel). In an example, the UE 202 can transmit the beam notification message 206 via the radio of UE 202. For example, if the UE 202 operates in Mode A, the beam notification message 206 may be a UL resource request, and if the UE 202 operates in Mode B, the beam notification message 206 may be a notification (e.g., an announcement) of an upcoming beam report in the second UL channel.

Next, UE 202 can transmit the beam report 208 to the base station 204 via a second channel (e.g., a second UL channel).

In some cases, the first channel used to transmit beam notification message 206 and/or the second channel used to transmit beam report 208 may comprise multiple channels. Accordingly, in various embodiments, the UE 202 and base station 204 may communicate via a number M of first channels, or M resources configured for the first channel, and a single second channel, via a single first channel and a number M of second channels or resources configured for the second channel, or via equal numbers M of first and second channels or resources. For example, the method 200 may make use of M-to-1 (e.g., for first UL channel retransmission), 1-to-M (e.g., for second UL channel retransmission), or M-to-M (e.g., for both first and second UL channel retransmissions) resource mapping and/or configuration between the first and second UL channels.

Next, the UE 202 can infer a communication failure 210. For example, the communication failure 210 may be caused by interference, as in the example of FIG. 1, and/or may have a different origin, such as a low battery level or malfunction of the UE 202, or a power outage of the base station 204, and is not limited by the present disclosure.

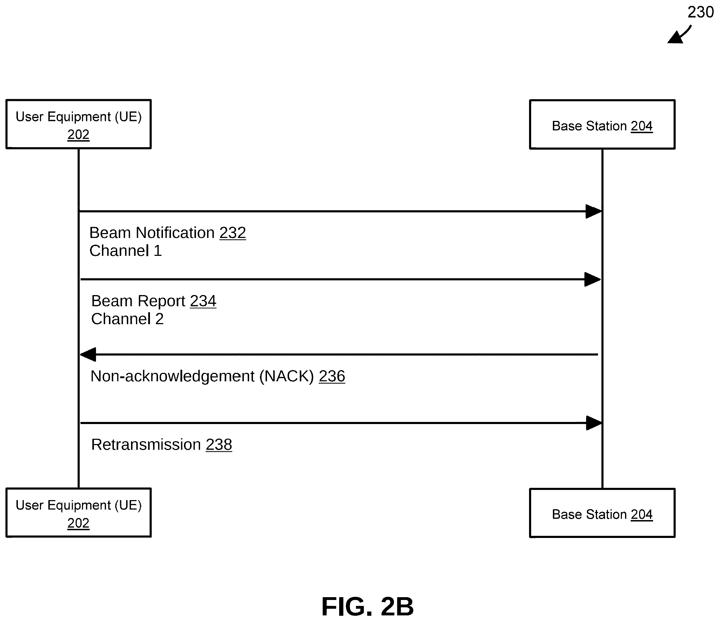

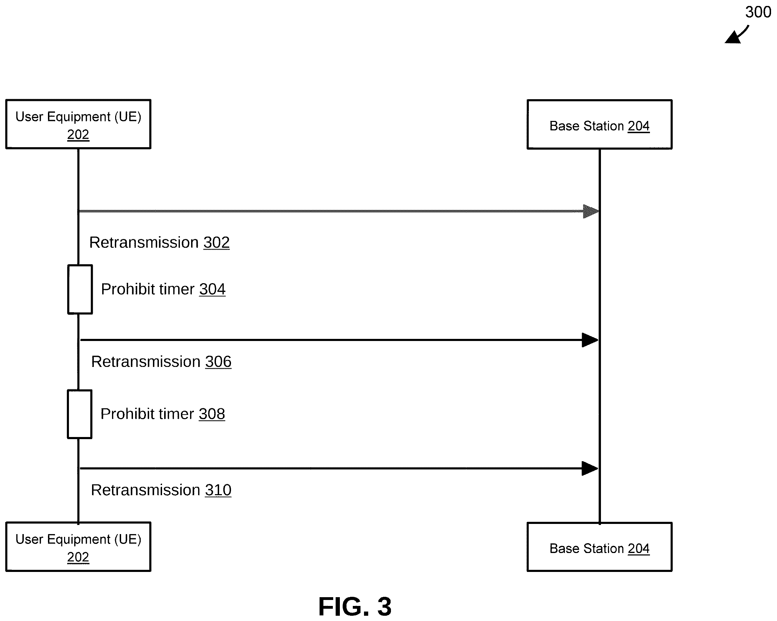

The UE 202 can use various modalities to infer the communication failure 210, as will be described in the examples of FIGS. 2B-2C and 3 below. In some cases, inferring the communication failure may be based on direct information (e.g., may be known with certainty), such as explicit acknowledgements (ACKs) or NACKs from the base station 204, whereas in other cases the communication failure may be inferred indirectly, for example based on unreceived messages or channel quality information, and is not limited by the present disclosure.

In response to (e.g., based on) inferring the communication failure 210, the UE 202 can send a retransmission 212. For example, if the inferred communication failure 210 is in the beam notification message 206, the UE 202 can retransmit the beam notification message 206 to the base station 204 via the first channel. If the inferred communication failure 210 is in the beam report 208, the UE 202 can retransmit the beam report 208 to the base station 204 via the second channel. For example, the UE 202 can repeat the transmission of the same beam report 208. In another example, the UE 202 can update the beam report, and can transmit the updated beam report via the second channel. In some examples, the UE 202 may send the retransmission 212 via the radio of UE 202, and based on (e.g., in response to) the inferred communication failure.

The method 200 can then end. Alternatively, the method 200 may continue, for example to method 300 of the example of FIG. 3.

FIGS. 2B-2C and 3 illustrate particular embodiments of the method 200 of FIG. 2A, such as various modalities of inferring the communication failure 210. FIG. 2B is a communication flow diagram illustrating a method 230 of retransmission based on an explicit NACK response in UEI beam reporting, according to an embodiment. The method 230 may be performed by a UE 202 in communication with a base station 204. For example, the UE 202 may correspond to the UE 605 and the base station 204 may correspond to the gNB 610 in the example of FIG. 6.

In an embodiment, the base station 204 may send explicit ACK/NACK responses. For example, the method 230 may be an embodiment of the method 200 of FIG. 2A, in which inferring the communication failure 210 is based on explicit ACK/NACK responses.

Referring to FIG. 2B, the UE 202 can first transmit the beam notification 232 (also referred to as a beam reporting indication message, a notice, an announcement, or a message) to the base station 204 via a first channel. For example, the UE 202 can transmit the beam notification 232 via a radio in UE 202. For example, if the UE 202 operates in Mode A, the beam notification 232 may be a UL resource request, and if the UE 202 operates in Mode B, the beam notification 232 may be a notification of the second UL channel.

Next, UE 202 can transmit the beam report 234 to the base station 204 via a second channel.

Next, the base station 204 can send a NACK response 236 to the UE 202. UE 202 can thereby become informed that a communication failure has occurred, such as the communication failure 210 of the example of FIG. 2A.

For example, applicable to both Mode A and Mode B of operation, an explicit ACK/NACK response may be transmitted from the base station 204 to the UE 202 in response to the first UL channel transmission 232. In some embodiments, as described in greater detail below, the UE 202 may wait for a specific time duration (e.g., a time gap) after transmitting the first UL channel (e.g., beam notification 232) to receive an ACK/NACK response, such as NACK response 236, from the base station 204. Such a time gap can be predefined, semi-statically configured, and/or dynamically indicated to UE 202 and may be implemented via a timer of the UE 202, for example a timer implemented by the processing circuit 620 of the example of FIG. 6.

Next, in response to receiving the NACK response 236, the UE 202 can send a retransmission 238. For example, if the communication failure is determined to be in the beam notification 232 (e.g., if UE 202 receives the NACK response 236 shortly after sending the beam notification 232), the UE 202 can retransmit the beam notification 232 to the base station 204 via the first channel. If the communication failure is determined to be in the beam report 234 (e.g., if the UE 202 receives the NACK response shortly after sending the beam report 234), the UE 202 can retransmit the beam report 234 to the base station 204 via the second channel. For example, the UE 202 can repeat the transmission of the same beam report 234, or can update the beam report and transmit the updated beam report via the second channel. In some examples, the UE 202 may send the retransmission 238 via the radio of UE 202, and based on (e.g., in response to) the inferred communication failure.

In some embodiments, the determination (e.g., inference 210) of the failure in the first or second channel may be based on a time duration (e.g., time gap) after transmission of the first or second UL channel. For example, in some embodiments, the UE 202 can default to retransmitting 238 the first UL channel, unless it receives an explicit ACK. For example, if the UE 202 receives an explicit ACK within the time gap, the UE 202 may consider that the first UL channel has been successfully received. Otherwise, the UE 202 may consider that the first UL channel failed, and accordingly may start retransmitting 238 the first UL channel. Alternatively, in some embodiments, the UE 202 can default not to retransmit the first UL channel, unless it receives an explicit NACK. In this case, if, as in the example of FIG. 2B, the explicit NACK response 236 is received by the UE 202 within the time gap after transmission of the first UL channel 232, UE 202 may consider the first UL channel has failed, and accordingly may start retransmitting 238 the first UL channel. Otherwise, the UE may consider the first UL channel has been successfully received.

In some cases, although the base station 204 may fail to decode the second UL channel, it may nevertheless be able to detect some received power. Therefore, another possible solution is that the base station 204 broadcasts a common NACK in the serving cell including information such as the time and frequency grids at which reception has failed. This may provide an implicit NACK for the UE 202 that has the same time and frequency allocation for its configured resource(s) for the second UL channel. In such embodiments, if no NACK is received by the UE 202 for a specific time duration (e.g., a time gap) after transmission of the second UL channel (e.g., beam report 234), the UE 202 may consider this an implicit ACK, and thus may consider that the second UL channel has been successfully received. Such a time gap can be predefined, semi-statically configured, and/or dynamically indicated to UE 202 and may be implemented via a timer of the UE 202, for example a timer implemented by the processing circuit 620 of the example of FIG. 6. If, as in the example of FIG. 2B, the explicit NACK response 236 is received by the UE 202 within the time gap, UE 202 may consider the second UL channel is failed, and accordingly may start retransmitting 238 the second UL channel.

Alternatively, an explicit ACK/NACK response may be transmitted from base station 204 to UE 202 in response to the second UL channel transmission (e.g., beam report 234). If the UE 202 does not receive the ACK/NACK response within a specific time duration after transmission of the second UL channel (e.g., beam report 234), the UE 202 may consider this as an implicit NACK/ACK response, respectively. Such a time gap can be predefined, semi-statically configured, and/or dynamically indicated to UE 202 and may be implemented via a timer of the UE 202, for example implemented by the processing circuit 620 of FIG. 6.

In some embodiments, the UE 202 can default to retransmitting the second UL channel, unless it receives an explicit ACK. For example, if the UE 202 receives an explicit ACK within the time gap after transmission of the second UL channel (e.g., beam report 234), the UE 202 may consider that the second UL channel has been successfully received. Otherwise, the UE 202 may consider that the second UL channel has failed, and accordingly may start retransmitting 238 the second UL channel. Alternatively, in some embodiments, the UE 202 can default not to retransmit the second UL channel, unless it receives an explicit NACK. In this case, if, as in the example of FIG. 2B, the explicit NACK response 236 is received by the UE 202 within the time gap after transmission of the second UL channel 234, UE 202 may consider the second UL channel has failed, and accordingly may start retransmitting 238 the second UL channel. Otherwise, the UE may consider the second UL channel has been successfully received.

The method 230 can then end. Alternatively, the method 230 may continue, for example to method 300 of the example of FIG. 3.

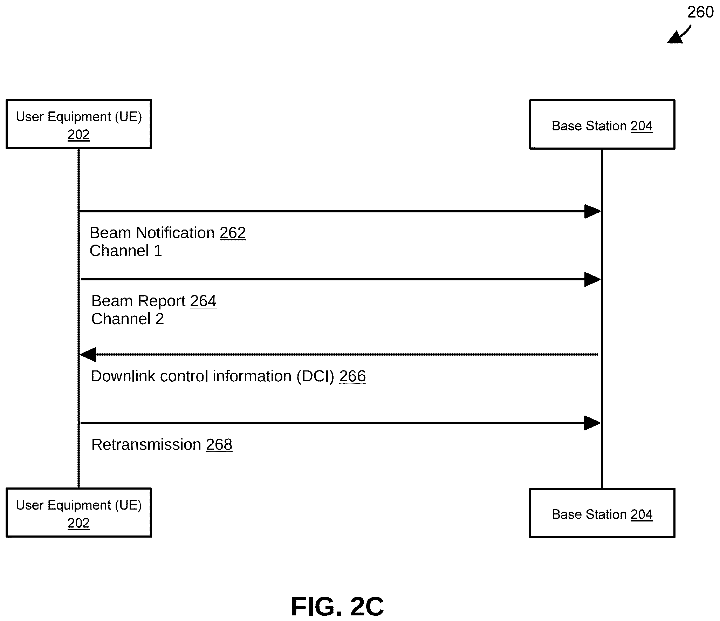

FIG. 2C is a communication flow diagram illustrating a method 260 of retransmission based on DCI in UEI beam reporting, according to an embodiment. The method 260 may be performed by a UE 202 in communication with a base station 204. For example, the UE 202 may correspond to the UE 605 and the base station 204 may correspond to the gNB 610 in the example of FIG. 6.

In an embodiment, the base station 204 may send DCI which may contain (e.g., be interpreted as) implicit ACK/NACK responses. For example, the method 260 may be an embodiment of the method 200 of FIG. 2A, in which inferring the communication failure 210 is based on DCIs.

Referring to FIG. 2C, the UE 202 can first transmit the beam notification 262 (also referred to as a beam reporting indication message, a notice, an announcement, or a message) to the base station 204 via a first channel. For example, the UE 202 can transmit the beam notification 262 via a radio in UE 202. For example, if the UE 202 operates in Mode A, the beam notification 262 may be a UL resource request, and if the UE 202 operates in Mode B, the beam notification 262 may be a notification of the second UL channel.

Next, UE 202 can transmit the beam report 264 to the base station 204 via a second channel.

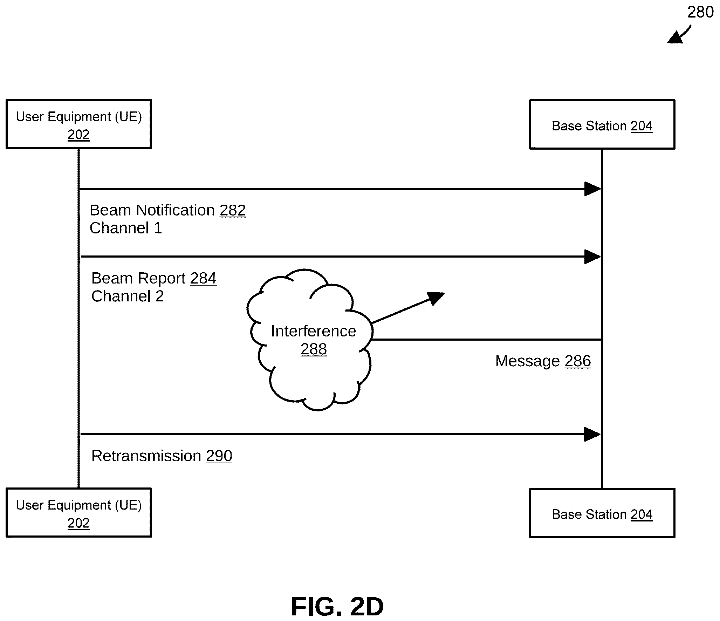

Next, the base station 204 can send DCI 266 to the UE 202, for example in the second channel. For example, the DCI 266 may include an indication, such as an implicit indication, that a communication failure has occurred, such as the communication failure 210 of the example of FIG. 2A. In another example, the UE 202 may fail to receive the expected DCI 266, as illustrated in the example of FIG. 2D below. In a third example, the UE 202 may fail to receive an expected update from the base station 204 in the second channel. UE 202 can thereby infer that a communication failure has occurred.

In an example, applicable to both Mode A and Mode B of operation, although the base station 204 may fail to decode the first UL channel, it may nevertheless be able to detect some received power. Accordingly, in some embodiments, the base station 204 broadcasts a common NACK in the serving cell including information such as the time and frequency grids at which reception has failed. This may provide an implicit NACK for the UE 202 that has the same time and frequency allocation for its configured resource(s) for the first UL channel. In this case, if no NACK is received by the UE 202 for a specific time duration (e.g., a time gap) after transmission of the first UL channel (e.g., beam notification 262), the UE 202 may consider this as an implicit ACK, and thus may consider that the first UL channel has been successfully received. Such a time gap can be predefined, semi-statically configured and/or dynamically indicated to UE 202 and may be implemented via a timer of the UE 202, for example a timer implemented by the processing circuit 620 of the example of FIG. 6. If an explicit NACK is received by the UE 202 within the time gap, UE 202 may consider the first UL channel is failed, and accordingly may start retransmitting 268 the first UL channel. In some examples, the UE 202 may send the retransmission 268 via the radio, and based on (e.g., in response to) the communication failure.

For the second UL channel retransmission, in either Mode A or Mode B, since the UE 202 may either be provided with dynamically indicated or configured grant (CG) UL resource(s), in case of any collision or failed detection, the base station 204 may infer a reception failure. Accordingly, the base station 204 can schedule the retransmission 268 via a dynamic grant that can act as an implicit indication to UE 202 that the second UL channel was not received (e.g., an implicit NACK). The base station 204 can send DCI 266, which may be a scheduling DCI scrambled by configured scheduling radio network temporary identifier (CS-RNTI) and having the same hybrid automatic repeat request (HARQ) process with a new data indicator (NDI) bit set to 1. This scheduling DCI can be DCI format 0-0, 0-1 and/or 0-2. The DCI 266 can act as an implicit NACK for the second UL channel. For example, if the DCI 266 is received by UE 202 within the time gap after transmission of the second UL channel (e.g., beam report 264), the UE 202 may consider that the second UL channel has failed, and accordingly start retransmitting 268 the second UL channel. The time gap can be predefined, semi-statically configured and/or dynamically indicated to UE 202 and may be implemented via a timer of the UE 202. If no such DCI is received by the UE 202 within the time gap after transmission of the second UL channel (e.g., beam report 264), the UE 202 may consider that the second UL channel has been successfully received (e.g., implicit ACK).

In Mode B of operation, the second UL channel can be configured with grant physical UL shared channel (PUSCH) resource(s). The first UL channel can be transmitted to notify (e.g., via beam notification 262) the base station 204 that the beam report 264 will subsequently be carried in the configured second UL channel. If reception of the first UL channel fails, the base station 204 does not receive notification 262 that the UEI beam report 264 is to be carried, so in order to improve resource utilization efficiency, the base station 204 may reallocate those already-CG PUSCH resource(s). Accordingly, the CG PUSCH resource(s) may be reallocated by base station 204 to the UE 202 (e.g., the same UE) for a different purpose, such as for dynamic grant. If this other activity (e.g., dynamic grant) occurs, the UE 202 can thereby become aware that the transmission of the first UL channel (e.g., beam notification 262) has failed, thus providing an implicit NACK indication to UE 202. If such implicit NACK is received by the UE 202, the UE 202 may consider that the first UL channel has failed, and may accordingly start retransmitting 268 the first UL channel. Otherwise, UE 202 may consider that the first UL channel has been successfully received. In this embodiment, the base station 204 may only be allowed to reallocate the CG PUSCH resource(s) for the second UL channel to the UE 202 (e.g., to the same UE).

For Mode B of operation, the pre-configured resource(s) for the second channel (e.g., for the transmission of beam report 264) can also be Type 2 CG PUSCH. In Type 2 CG, the resource allocation is via semi-static configuration as well as DCI (e.g., DCI 266). That is, after the transmission of the first UL channel (e.g., the beam notification 262), the base station 204 can send DCI 266 to inform the UE 202 about activation, deactivation, changes, and/or adjustments of the semi-statically CG PUSCH resources for the second UL channel. The DCI 266 can act as an implicit ACK for the first UL channel. In the case that Type 2 CG PUSCH resources for the second UL channel have not yet been activated, if the transmission of the first UL channel has failed, the base station 204 may not send the activation DCI 266 as an implicit ACK for the second UL channel to the UE 202. Since the resources for the second UL channel have not been activated, the UE 202 may infer that the transmission of the first channel (e.g., beam notification 262) has failed and retransmission is required. If an activation DCI 266 as an implicit ACK is received by the UE 202, UE 202 may consider that the first UL channel has been successfully received. Otherwise, UE 202 may consider that the first UL channel has failed, and accordingly can start retransmitting 268 the first UL channel.

Alternatively, in case that Type 2 CG PUSCH resources for the second UL channel have already been activated, in response to a missing or failed reception of the first UL channel (e.g., beam notification 262), the base station 204 may send the DCI 266 to deactivate the semi-statically CG PUSCH resources for the second UL channel. In this case, the base station 204 may send the deactivation DCI 266 before the second UL channel transmission (e.g., beam report 264). Accordingly, the deactivation DCI 266 can act as an implicit NACK for the first UL channel transmission. If a deactivation DCI as an implicit NACK is received by the UE 202, UE 202 may consider that the first UL channel has failed, and may start retransmitting 268 the first UL channel. Otherwise, UE 202 may consider the first UL channel has been successfully received.

Generally, for the case of UEI reporting of multiple events, in response to the first UL channel transmission (e.g., beam notification 262), the base station 204 may send DCI 266 to inform UE 202 of activation, deactivation, change, and/or adjustment to the semi-statically CG PUSCH resources for the second UL channel. DCI 266 may act as an implicit ACK/NACK for the first UL channel. In an example, if UE 202 receives an implicit ACK (e.g., an activation DCI), UE 202 can consider that the first UL channel has been successfully received. In another example, if UE 202 receives an implicit NACK (e.g., a deactivation DCI, a changing DCI, or an adjustment DCI), the UE 202 can consider that the first UL channel has failed, and can start retransmitting 268 the first UL channel.

For example, in Mode B of operation, the second UL channel can be CG PUSCH resource(s). A notification (e.g., beam notification 262) can be transmitted in the first UL channel to notify the base station 204 that the beam report 264 will be carried in the configured second UL channel. If reception of the first UL channel fails, the base station 204 does not receive notification 262 from UE 202 that the UEI beam report 264 is to be carried, so in order to improve resource utilization efficiency, the base station 204 may reallocate those already-CG PUSCH resource(s). In such scenarios, the base station 204 may infer interference and/or a collision, likely due to detection failure in those PUSCH resources. Accordingly, the base station 204 can schedule dynamic grant PUSCH resource(s) for retransmission of the second UL channel.

Additionally, if those CG PUSCH resource(s) are reallocated by the base station 204 to UE 202 (e.g., to the same UE) for a different purpose, the UE 202 can thereby become aware that the transmission of the first UL channel (e.g., beam notification 262) has failed, and that the UE 202 must re-initiate the UEI reporting procedure using the next available UL resources.

Next, in response to receiving the DCI 266 (e.g., an implicit NACK response), the UE 202 can infer that a communication failure has occurred, such as the communication failure 210 of the example of FIG. 2A, and in response can send a retransmission 268. For example, if the communication failure is inferred to be in the beam notification 262, the UE 202 can retransmit the beam notification 262 to the base station 204 via the first channel. If the communication failure is determined to be in the beam report 264, the UE 202 can retransmit the beam report 264 to the base station 204 via the second channel. For example, the UE 202 can repeat the transmission of the same beam report 264, or can update the beam report and transmit the updated beam report via the second channel.

The method 260 can then end. Alternatively, the method 260 may continue, for example to method 300 of the example of FIG. 3.

FIG. 2D is a communication flow diagram illustrating a method 280 of retransmission based on an unreceived (e.g., missing) message (e.g., DCI or an expected update) in UEI beam reporting, according to an embodiment. The method 280 may be performed by a UE 202 in communication with a base station 204. For example, the UE 202 may correspond to the UE 605 and the base station 204 may correspond to the gNB 610 in the example of FIG. 6.

In an embodiment, the UE 202 may fail to receive an expected message, such as DCI or an update. For example, the method 260 may be an embodiment of the method 200 of FIG. 2A, in which inferring the communication failure 210 is based on failing to receive an expected message.

Referring to FIG. 2D, the UE 202 can first transmit the beam notification 282 (also referred to as a beam reporting indication message, a notice, an announcement, or a message) to the base station 204 via a first channel. For example, if the UE 202 operates in Mode A, the beam notification 282 may be a UL resource request, and if the UE 202 operates in Mode B, the beam notification 282 may be a notification of the second UL channel.

Next, UE 202 can transmit the beam report 284 to the base station 204 via a second channel.

Next, the base station 204 can send a message 286, such as DCI 266 of the example of FIG. 2C and/or an update, to the UE 202, for example in the second channel. However, in this example, the message 286 is subject to interference 288, and may therefore fail to transmit successfully to the UE 202, similar to the example of FIG. 1. As a result, the UE 202 may fail to receive the expected message 286 (e.g., an expected DCI and/or update), and may thereby infer that a communication failure has occurred, such as the communication failure 210 of the example of FIG. 2A.

Next, in response to failing to receive the expected message 286 and inferring the communication failure, the UE 202 can send a retransmission 290. For example, if the UE 202 infers the communication failure is in the beam notification 282, it can retransmit the beam notification 282 to the base station 204 via the first channel. If UE 202 determines the communication failure is in the beam report 284, it can retransmit the beam report 284 to the base station 204 via the second channel. For example, the UE 202 can repeat the transmission of the same beam report 284, or can update the beam report and transmit the updated beam report via the second channel.

The method 280 can then end. Alternatively, the method 280 may continue, for example to method 300 of the example of FIG. 3.

Given all the retransmission schemes as discussed in the examples of FIGS. 2A-2D, in various embodiments, the base station 204 may treat multiple retransmissions received from the UE 202 in the first and/or second UL channel in various ways. For example, in Mode A of operation, the base station 204 may successfully receive the beam notification in the first UL channel but for some reason such as high traffic condition and limited available UL resources, it may delay sending the DCI format 266 to the UE 202. In such scenarios, UE 202 may start retransmitting the first UL channel and the base station 204 may receive multiple retransmissions of the very same first UL channel, as described in the example of FIG. 3 below. One solution can be specifying a minimum necessary time gap between each two consecutive retransmissions, such as a prohibit timer described in the example of FIG. 3. This time gap can be predefined, semi-statically configured or dynamically indicated to UE 202 by the base station 204, based on channel and traffic conditions. This solution is also applicable to the second UL channel retransmissions.

FIG. 3 is a communication flow diagram illustrating a method 300 of retransmission based on channel quality information in UEI beam reporting, according to an embodiment. The method 230 may be performed by a UE 202 in communication with a base station 204. For example, the UE 202 may correspond to the UE 605 and the base station 204 may correspond to the gNB 610 in the example of FIG. 6.

In an embodiment, the UE 202 may send multiple retransmissions of the first UL channel with no expectation of a response from the base station 204. In some embodiments, the method 300 may be a continuation of the method 200 of FIG. 2A, in a case wherein inferring the communication failure 210 is based on channel quality information. Thus, as in the example of FIG. 2A, the UE 202 can first transmit beam notification message 206 and beam report 208, before inferring communication failure 210 and sending retransmission 212. Inferring communication failure 210 can be based on channel quality information (e.g., assessed channel quality information). For example, the UE 202 may make direct assessments (e.g., measurements) of the channel quality, or may determine the channel quality based on errors in transmissions received from the base station 204.

For example, in an embodiment in which inferring the communication failure 210 is based on channel quality information that indicates poor channel quality, the UE 202 may send multiple retransmissions, such as retransmission 212 of FIG. 2A, and retransmissions 302, 306, and 310 in this example, so as to compensate for the poor channel quality. To address possible reception failure of the first or second UL channel, applicable to both Mode A and Mode B, in one embodiment, the UE 202 may send multiple retransmissions of the first or second UL channel with no expectation of a response from the base station 204. However, these multiple retransmissions may be limited, delayed, or otherwise controlled by prohibit timer and/or prohibit counter logic as disclosed herein.

In some examples, such multiple retransmissions may be feasible through one-toM or M-to-M mapping scheme(s) where multiple UL resources are granted to the second UL channel all corresponding to each first UL channel.

Referring to FIG. 3, the UE 202 can first send retransmission 302 to base station 204. In one example, retransmission 302 may be the same as retransmission 212, but is not limited by the present disclosure.

Next, the UE 202 may follow prohibit timer logic 304. For example, prohibit timer logic 304 may require a predetermined time interval between retransmissions, such as 50 ms, 100 ms, 1 s, 5 s, or 25 s. In this case, the UE 202 may wait the predetermined time interval after sending retransmission 302.

Next, the UE 202 can send retransmission 306 to base station 204. For example, UE 202 can send retransmission 306 to base station 204 in response to prohibit timer logic 304 being satisfied.

Next, the UE 202 may follow prohibit timer logic 308. For example, prohibit timer logic 308 may require a predetermined time interval between retransmissions, such as 50 ms, 100 ms, 1 s, 5 s, or 25 s. Accordingly, UE 202 may wait the predetermined time interval after sending retransmission 306.

Finally, the UE 202 can send retransmission 310 to base station 204. For example, UE 202 can send retransmission 310 to base station 204 in response to prohibit timer logic 308 being satisfied. The method 300 can then end.

In this example, UE 202 is illustrated as sending a total of three retransmissions 302, 306, and 310. However, in various embodiments, the UE 202 can send any number of retransmissions, and is not limited by the present disclosure. In some embodiments, UE 202 can alternatively or additionally use a prohibit counter, which may limit the total number of retransmissions, for example to 3, 5, 10, 50, or any other number of retransmissions.

In some embodiments, both a prohibit counter and prohibit timer can be jointly applied, so as to prevent redundant retransmissions. For example, a prohibit counter can start counting the number of the first UL channel transmissions (e.g., retransmissions 302, 306, and 310) immediately after sending the first transmission (e.g., retransmission 212 or retransmission 302). When the number of first UL channel transmissions reaches a maximum number, the prohibit timer (e.g., prohibit timer 304 and 308) may be triggered. Note that the maximum number of retransmissions may be predefined, semi-statically configured and/or dynamically indicated to the UE 202. The prohibit timer would then start running until it reaches the maximum time interval between retransmissions, after which the prohibit counter and prohibit timer may both be reset to zero. The maximum time interval for the prohibit timer can also be predefined, semi-statically configured and/or dynamically indicated to the UE 202. The UE 202 is forbidden to retransmit the first UL channel while the prohibit timer is timing.

Alternatively, some embodiments may utilize a prohibit timer only, as illustrated in FIG. 3, or a prohibit counter only. In some examples, the prohibit counter and/or prohibit timer may be operated after the first UL channel transmission, and may then be reset when the UE 202 transmits the second UL channel. Applicable to Mode A only, the prohibit counter and/or prohibit timer can be reset when the UE 202 receives the DCI format 266 from the base station 204. In another embodiment, applicable to Mode B only, retransmissions by UE 202 of the first UL channel are allowed until a number X of symbols (e.g., X = 2, 3, 4, or another number) before the first available symbol of UL resource(s) of the second UL channel.

In various embodiments, such methods of performing multiple retransmissions with no response from the base station 204 can be configured and/or indicated to the UE 202 by the base station 204. Alternatively, the multiple retransmission methods may be triggered and/or initiated by the UE 202 itself. In an example, such multiple retransmission methods may improve UEI beam reporting when the channel quality is poor. In another example, the multiple retransmissions may improve UEI beam reporting when no other UEI events are triggered in a specific period of time, so the already-configured PUCCH resources for the first channel are unused and are accordingly available to perform the multiple retransmissions.

In some examples, the UL resources used by UE 202 for such multiple retransmissions may be indicated or configured for the second UL channel (for example, dynamically scheduled PUSCH in Mode A, or CG PUSCH in Mode B). In Mode A of operation, the base station 204 may schedule multiple UL resources dynamically. In Mode B, depending on the channel quality and whether channel state information (CSI) has been acquired, the base station 204 may define a small periodicity for the second UL channel, or may configure multiple Type 1 CG PUSCH resources by dedicated RRC signaling. For example, configuring multiple Type 1 CG PUSCH resources may be implemented with a 1-toM or M-to-M resource mapping and/or configuration between the first and second UL channels for a given CSI configuration. This can provide a number M of retransmission opportunities of the second UL channel for each transmitted first UL channel.

In some examples, when multiple retransmissions occur without a base station response, the base station 204 may be aware of the retransmissions, and may treat all the retransmissions as corresponding to a single UEI report configuration. For the first UL channel retransmission, the base station 204 may decode just one of the received UL first channels and drop decoding the remaining retransmissions. To do so, base station 204 may use a timer and/or a counter. For example, the base station 204 may include a timer that starts timing after the first successful reception of the first UL channel. In this example, base station 204 may drop decoding the received configured PUCCH resources for the first UL channel until the timer reaches a maximum value and is reset. In another example, the timer may be reset when UE 202 receives a response from base station 204, or when UE 202 transmits the second UL channel. This maximum timer value can be predefined, semi-statically configured and/or dynamically indicated to UE 202. Similarly, the base station 204 may include a counter that starts counting the number of received periodic PUCCH resources after the first successful reception of the first UL channel. In one such example, the base station 204 may drop decoding the received configured PUCCH resources for the first UL channel while the counter value is smaller than a maximum value, and the counter can then be reset on reaching the maximum value. Alternatively, the counter may be reset when UE 202 receives a response from the base station 204, or when the UE 202 transmits the second UL channel. The maximum counter value can be predefined, semi-statically configured and/or dynamically indicated to UE 202. A similar method can be applied to the second UL channel retransmission. However, it is noted that for the second UL channel retransmissions, each second UL channel may have an updated UEI reporting content, and accordingly, it may still be necessary for the base station 204 to decode all retransmissions of the second UL channel.

Furthermore, all retransmissions can use the already configured and/or scheduled UL resources. Accordingly, the resource mapping and/or configuration between the first and second UL channels for a given CSI configuration may be used to assist the base station 204 in distinguishing retransmissions of the same UL channel from a first transmission of a new UEI reporting.

In some examples, the base station 204 may successfully decode multiple first UL channels and may treat them as separate first UL channels. In this case, Mode B of operation can proceed normally, since there no response is expected from the base station 204, and UL resources for the second UL channel are already CG. This example may be based on the assumption that base station 204 is forbidden to reallocate the already-configured resources for the second UL channel in Mode B to other purposes and/or to other UEs.

However, in Mode A of operation, since the first UL channel transmission may be a request to allocate resources for the second UL channel, in response to receiving multiple retransmissions of the first UL channel, the base station 204 may erroneously transmit multiple DCIs to the UE 202, and erroneously schedule multiple DG-PUSCH resources for a single second UL channel. In this case, the UE 202 may use the multiple scheduled resources for retransmission of the second UL channel, either with repetitions (e.g., the same content), or with updated content.

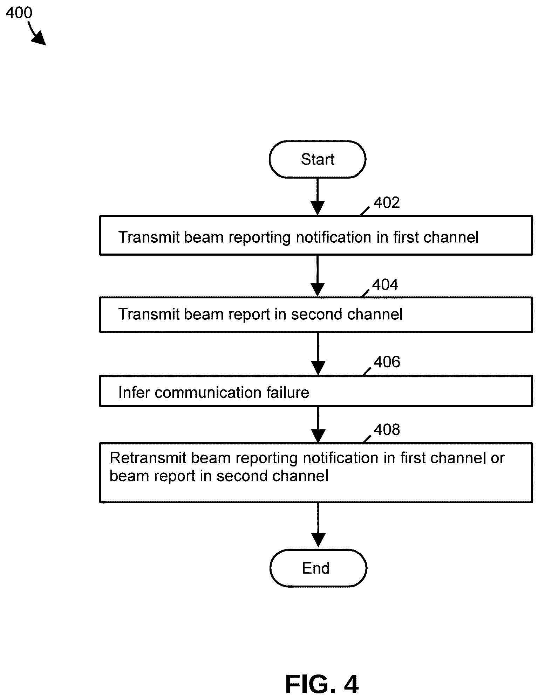

FIG. 4 is a flow diagram illustrating a method 400 of retransmission in UEI beam reporting, according to an embodiment. The method 400 may be performed by a UE in communication with a base station, such as the UE 605 and the gNB 610 in the example of FIG. 6.

Referring to FIG. 4, the method 400 can begin with the UE transmitting at 402 a beam notification (also referred to as a beam reporting indication message, a notice, an announcement, or a message) to the base station via a first channel. For example, the UE can transmit at 402 the beam notification via a radio of the UE, such as radio 615 in the example of FIG. 6. In some embodiments, in Mode A, the beam notification may be a UL resource request, whereas in Mode B, the beam notification may be a notification of an upcoming beam report in the second UL channel.

Next, UE can transmit at 404 a beam report to the base station via a second channel.

Next, the UE can infer at 406 a communication failure. For example, the communication failure may be caused by interference, as in the example of FIG. 1, and/or by another cause, such as a power outage of the UE.

The UE can infer at 406 the communication failure by various modalities, as described above. In some cases, inferring at 406 the communication failure may be based on direct information such as an ACK/NACK signal from the base station, while in other cases the communication failure may be inferred at 406 indirectly.

Finally, in response to inferring at 406 the communication failure, the UE can send at 408 a retransmission. For example, if the inferred communication failure is in the beam notification, the UE can retransmit at 408 the beam notification to the base station via the first channel. If the inferred communication failure is in the beam report, the UE can retransmit at 408 the beam report to the base station via the second channel. For example, the UE can repeat the transmission of the same beam report. In another example, the UE can update the beam report, and can transmit the updated beam report via the second channel.

The method 400 can then end. Alternatively, the method 400 may continue, for example with multiple retransmissions, as in the example of FIG. 3.

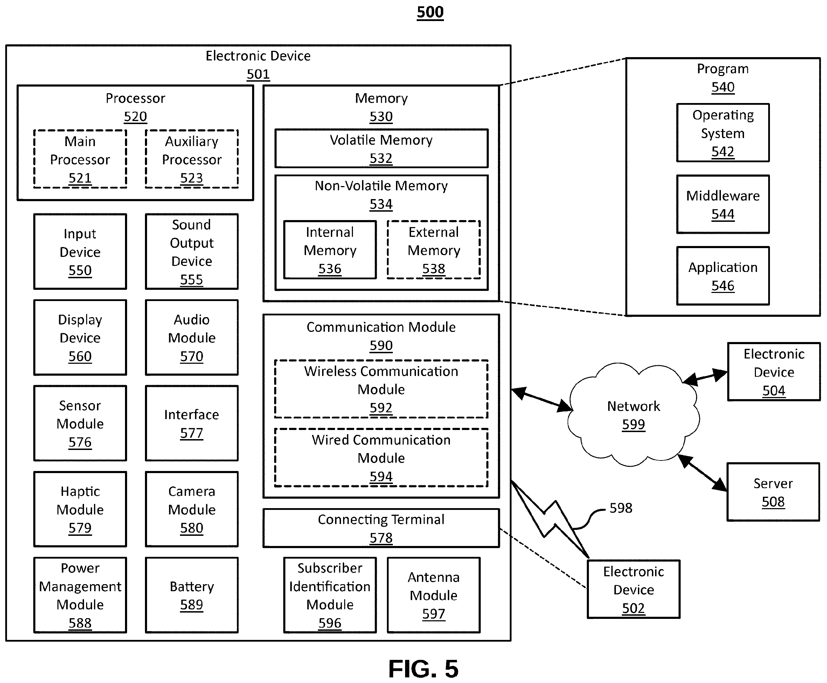

FIG. 5 is a block diagram of an electronic device in a network environment 500, according to an embodiment. For example, the UE and/or base station of FIGS. 1, 2A-2D, 3, and 4 may include an electronic device such as device 500.

Referring to FIG. 5, an electronic device 501 in a network environment 500 may communicate with an electronic device 502 via a first network 598 (e.g., a short-range wireless communication network), or an electronic device 504 or a server 508 via a second network 599 (e.g., a long-range wireless communication network). The electronic device 501 may communicate with the electronic device 504 via the server 508. The electronic device 501 may include a processor 520, a memory 530, an input device 550, a sound output device 555, a display device 560, an audio module 570, a sensor module 576, an interface 577, a haptic module 579, a camera module 580, a power management module 588, a battery 589, a communication module 590, a subscriber identification module (SIM) card 596, or an antenna module 597. In one embodiment, at least one (e.g., the display device 560 or the camera module 580) of the components may be omitted from the electronic device 501, or one or more other components may be added to the electronic device 501. Some of the components may be implemented as a single integrated circuit (IC). For example, the sensor module 576 (e.g., a fingerprint sensor, an iris sensor, or an illuminance sensor) may be embedded in the display device 560 (e.g., a display).

The processor 520 may execute software (e.g., a program 540) to control at least one other component (e.g., a hardware or a software component) of the electronic device 501 coupled with the processor 520 and may perform various data processing or computations.

As at least part of the data processing or computations, the processor 520 may load a command or data received from another component (e.g., the sensor module 576 or the communication module 590) in volatile memory 532, process the command or the data stored in the volatile memory 532, and store resulting data in non-volatile memory 534. The processor 520 may include a main processor 521 (e.g., a central processing unit (CPU) or an application processor (AP)), and an auxiliary processor 523 (e.g., a graphics processing unit (GPU), an image signal processor (ISP), a sensor hub processor, or a communication processor (CP)) that is operable independently from, or in conjunction with, the main processor 521. Additionally or alternatively, the auxiliary processor 523 may be adapted to consume less power than the main processor 521, or execute a particular function. The auxiliary processor 523 may be implemented as being separate from, or a part of, the main processor 521.

The auxiliary processor 523 may control at least some of the functions or states related to at least one component (e.g., the display device 560, the sensor module 576, or the communication module 590) among the components of the electronic device 501, instead of the main processor 521 while the main processor 521 is in an inactive (e.g., sleep) state, or together with the main processor 521 while the main processor 521 is in an active state (e.g., executing an application). The auxiliary processor 523 (e.g., an image signal processor or a communication processor) may be implemented as part of another component (e.g., the camera module 580 or the communication module 590) functionally related to the auxiliary processor 523.

The memory 530 may store various data used by at least one component (e.g., the processor 520 or the sensor module 576) of the electronic device 501. The various data may include, for example, software (e.g., the program 540) and input data or output data for a command related thereto. The memory 530 may include the volatile memory 532 or the non-volatile memory 534. Non-volatile memory 534 may include internal memory 536 and/or external memory 538.

The program 540 may be stored in the memory 530 as software, and may include, for example, an operating system (OS) 542, middleware 544, or an application 546.

The input device 550 may receive a command or data to be used by another component (e.g., the processor 520) of the electronic device 501, from the outside (e.g., a user) of the electronic device 501. The input device 550 may include, for example, a microphone, a mouse, or a keyboard.

The sound output device 555 may output sound signals to the outside of the electronic device 501. The sound output device 555 may include, for example, a speaker or a receiver. The speaker may be used for general purposes, such as playing multimedia or recording, and the receiver may be used for receiving an incoming call. The receiver may be implemented as being separate from, or a part of, the speaker.

The display device 560 may visually provide information to the outside (e.g., a user) of the electronic device 501. The display device 560 may include, for example, a display, a hologram device, or a projector and control circuitry to control a corresponding one of the display, hologram device, and projector. The display device 560 may include touch circuitry adapted to detect a touch, or sensor circuitry (e.g., a pressure sensor) adapted to measure the intensity of force incurred by the touch.

The audio module 570 may convert a sound into an electrical signal and vice versa. The audio module 570 may obtain the sound via the input device 550 or output the sound via the sound output device 555 or a headphone of an external electronic device 502 directly (e.g., wired) or wirelessly coupled with the electronic device 501.

The sensor module 576 may detect an operational state (e.g., power or temperature) of the electronic device 501 or an environmental state (e.g., a state of a user) external to the electronic device 501, and then generate an electrical signal or data value corresponding to the detected state. The sensor module 576 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 577 may support one or more specified protocols to be used for the electronic device 501 to be coupled with the external electronic device 502 directly (e.g., wired) or wirelessly. The interface 577 may include, for example, a high- definition multimedia interface (HDMI), a universal serial bus (USB) interface, a secure digital (SD) card interface, or an audio interface.

A connecting terminal 578 may include a connector via which the electronic device 501 may be physically connected with the external electronic device 502. The connecting terminal 578 may include, for example, an HDMI connector, a USB connector, an SD card connector, or an audio connector (e.g., a headphone connector).

The haptic module 579 may convert an electrical signal into a mechanical stimulus (e.g., a vibration or a movement) or an electrical stimulus which may be recognized by a user via tactile sensation or kinesthetic sensation. The haptic module 579 may include, for example, a motor, a piezoelectric element, or an electrical stimulator.

The camera module 580 may capture a still image or moving images. The camera module 580 may include one or more lenses, image sensors, image signal processors, or flashes. The power management module 588 may manage power supplied to the electronic device 501. The power management module 588 may be implemented as at least part of, for example, a power management integrated circuit (PMIC).

The battery 589 may supply power to at least one component of the electronic device 501. The battery 589 may include, for example, a primary cell which is not rechargeable, a secondary cell which is rechargeable, or a fuel cell.

The communication module 590 may support establishing a direct (e.g., wired) communication channel or a wireless communication channel between the electronic device 501 and the external electronic device (e.g., the electronic device 502, the electronic device 504, or the server 508) and performing communication via the established communication channel. The communication module 590 may include one or more communication processors that are operable independently from the processor 520 (e.g., the AP) and supports a direct (e.g., wired) communication or a wireless communication. The communication module 590 may include a wireless communication module 592 (e.g., a cellular communication module, a short-range wireless communication module, or a global navigation satellite system (GNSS) communication module) or a wired communication module 594 (e.g., a local area network (LAN) communication module or a power line communication (PLC) module). A corresponding one of these communication modules may communicate with the external electronic device via the first network 598 (e.g., a short-range communication network, such as BLUETOOTH^{™}, wireless-fidelity (Wi-Fi) direct, or a standard of the Infrared Data Association (IrDA)) or the second network 599 (e.g., a long-range communication network, such as a cellular network, the Internet, or a computer network (e.g., LAN or wide area network (WAN)). These various types of communication modules may be implemented as a single component (e.g., a single IC), or may be implemented as multiple components (e.g., multiple ICs) that are separate from each other. The wireless communication module 592 may identify and authenticate the electronic device 501 in a communication network, such as the first network 598 or the second network 599, using subscriber information (e.g., international mobile subscriber identity (IMSI)) stored in the subscriber identification module 596.

The antenna module 597 may transmit or receive a signal or power to or from the outside (e.g., the external electronic device) of the electronic device 501. The antenna module 597 may include one or more antennas, and, therefrom, at least one antenna appropriate for a communication scheme used in the communication network, such as the first network 598 or the second network 599, may be selected, for example, by the communication module 590 (e.g., the wireless communication module 592). The signal or the power may then be transmitted or received between the communication module 590 and the external electronic device via the selected at least one antenna.

Commands or data may be transmitted or received between the electronic device 501 and the external electronic device 504 via the server 508 coupled with the second network 599. Each of the electronic devices 502 and 504 may be a device of a same type as, or a different type, from the electronic device 501. All or some of operations to be executed at the electronic device 501 may be executed at one or more of the external electronic devices 502, 504, or 508. For example, if the electronic device 501 should perform a function or a service automatically, or in response to a request from a user or another device, the electronic device 501, instead of, or in addition to, executing the function or the service, may request the one or more external electronic devices to perform at least part of the function or the service. The one or more external electronic devices receiving the request may perform the at least part of the function or the service requested, or an additional function or an additional service related to the request and transfer an outcome of the performing to the electronic device 501. The electronic device 501 may provide the outcome, with or without further processing of the outcome, as at least part of a reply to the request. To that end, a cloud computing, distributed computing, or client-server computing technology may be used, for example.

FIG. 6 shows a system including a UE 605 and a gNB 610, in communication with each other. The UE may include a radio 615 and a processing circuit (or a means for processing) 620, which may perform various methods disclosed herein, e.g., the method illustrated in FIG. 1. For example, the processing circuit 620 may receive, via the radio 615, transmissions from the network node (gNB) 610, and the processing circuit 620 may transmit, via the radio 615, signals to the gNB 610.

Embodiments of the subject matter and the operations described in this specification may be implemented in digital electronic circuitry, or in computer software, firmware, or hardware, including the structures disclosed in this specification and their structural equivalents, or in combinations of one or more of them. Embodiments of the subject matter described in this specification may be implemented as one or more computer programs, i.e., one or more modules of computer-program instructions, encoded on computer-storage medium for execution by, or to control the operation of data-processing apparatus. Alternatively or additionally, the program instructions can be encoded on an artificially-generated propagated signal, e.g., a machine-generated electrical, optical, or electromagnetic signal, which is generated to encode information for transmission to suitable receiver apparatus for execution by a data processing apparatus. A computer-storage medium can be, or be included in, a computer-readable storage device, a computer-readable storage substrate, a random or serial-access memory array or device, or a combination thereof. Moreover, while a computer-storage medium is not a propagated signal, a computer-storage medium may be a source or destination of computer-program instructions encoded in an artificially-generated propagated signal. The computer-storage medium can also be, or be included in, one or more separate physical components or media (e.g., multiple CDs, disks, or other storage devices). Additionally, the operations described in this specification may be implemented as operations performed by a data-processing apparatus on data stored on one or more computer-readable storage devices or received from other sources.

While this specification may contain many specific implementation details, the implementation details should not be construed as limitations on the scope of any claimed subject matter, but rather be construed as descriptions of features specific to particular embodiments. Certain features that are described in this specification in the context of separate embodiments may also be implemented in combination in a single embodiment. Conversely, various features that are described in the context of a single embodiment may also be implemented in multiple embodiments separately or in any suitable subcombination. Moreover, although features may be described above as acting in certain combinations and even initially claimed as such, one or more features from a claimed combination may in some cases be excised from the combination, and the claimed combination may be directed to a subcombination or variation of a subcombination.

Similarly, while operations are depicted in the drawings in a particular order, this should not be understood as requiring that such operations be performed in the particular order shown or in sequential order, or that all illustrated operations be performed, to achieve desirable results. In certain circumstances, multitasking and parallel processing may be advantageous. Moreover, the separation of various system components in the embodiments described above should not be understood as requiring such separation in all embodiments, and it should be understood that the described program components and systems can generally be integrated together in a single software product or packaged into multiple software products.

Thus, particular embodiments of the subject matter have been described herein. Other embodiments are within the scope of the following claims. In some cases, the actions set forth in the claims may be performed in a different order and still achieve desirable results. Additionally, the processes depicted in the accompanying figures do not necessarily require the particular order shown, or sequential order, to achieve desirable results. In certain implementations, multitasking and parallel processing may be advantageous.

As will be recognized by those skilled in the art, the innovative concepts described herein may be modified and varied over a wide range of applications. Accordingly, the scope of claimed subject matter should not be limited to any of the specific exemplary teachings discussed above, but is instead defined by the following claims.

## Claims

1. A user equipment, UE, (202, 605) comprising:
a radio (615); and
a processing circuit (620); and configured to:
perform a UE-initiated beam reporting procedure comprising:
transmitting, via the radio (615), a beam reporting indication message (206; 232; 262) in a first channel to initiate beam reporting; and
transmitting, via the radio (615), a beam report (208; 234; 264) in a second channel;
infer a communication failure (210) of the UE-initiated beam reporting procedure; and
in response to inferring the communication failure (210) of the UE-initiated beam reporting procedure, retransmit at least one of the beam reporting indication message (206; 232; 262) in the first channel or the beam report (208; 234; 264) in the second channel.

2. The UE (202, 605) of claim 1, wherein to infer the communication failure (210) comprises to recognize the communication failure based on a base station (204, 610) non-acknowledgement, NACK, response (236) received by the radio (615).

3. The UE (202, 605) of claim 1, wherein to infer the communication failure (210) is based on:
downlink, DL, control information, DCI, (266) received by the radio (615); or
DCI expected and unreceived by the radio (615).

4. The UE (202, 605) of claim 1, wherein to infer the communication failure (210) is based on one or more of:
an update expected and unreceived by the radio (615);
a dynamic grant; or
a configured grant resource reallocated by a base station (204, 610).

5. The UE (202, 605) of claim 1, wherein to infer the communication failure (210) is based on assessed channel quality information.

6. The UE (202, 605) of claim 5, wherein the UE (202, 605) is further configured to implement:
a prohibit counter implemented to prevent more than a predetermined maximum number of retransmissions (302, 308, 310); or
a prohibit timer implemented to require a predetermined time interval between retransmissions (302, 308, 310).

7. The UE (202, 605) of any one of claims 1 to 6, wherein to retransmit the beam reporting indication message (206; 232; 262) in the first channel or the beam report (208; 234; 264) in the second channel comprises to:
repeat, by the radio (615), the transmission of the beam report (208; 234; 264) in the second channel; or
update the beam report (208; 234; 264) and transmit, by the radio (615), the updated beam report (208; 234; 264) in the second channel.

8. The UE (202, 605) of any one of claims 1 to 7, wherein:
the first channel comprises a number M of first channels or first uplink, UL, resources; or
the second channel comprises a number M of second channels or second UL resources.

9. The UE (202, 605) of any one of claims 1 to 7, wherein:
the first channel is a first uplink, UL, channel; and
the second channel is a second UL channel.

10. The UE (202, 605) of any one of claims 1 to 9, wherein:
responsive to the UE operating in a Mode A, the beam reporting indication message (206; 232; 262) in the first channel comprises an uplink, UL, resource request; and
responsive to the UE operating in a Mode B, the beam reporting indication message (206; 232; 262) in the first channel comprises a notification of the beam report (208; 234; 264) to be transmitted in the second channel.

11. A method of user equipment, UE,-initiated beam reporting, the method comprising:
performing, by a UE (202, 605), a UE-initiated beam reporting procedure comprising:
transmitting, via a radio (615), a beam reporting indication message (206; 232; 262) in a first channel to initiate beam reporting;
transmitting, via the radio (615), a beam report (208; 234; 264) in a second channel;
inferring a communication failure (210) of the UE-initiated beam reporting procedure; and
in response to inferring the communication failure (210) of the UE-initiated beam reporting procedure, retransmitting, by the UE (202, 605), at least one of the beam reporting indication message (206; 232; 262) in the first channel or the beam report (208; 234; 264) in the second channel.

12. The method of claim 11, wherein inferring the communication failure (210) comprises recognizing the communication failure based on receiving, via the radio (615), a base station (204, 610) non-acknowledgement, NACK, response (236).

13. The method of claim 11, wherein inferring the communication failure (210) is based on:
receiving, via the radio (615), downlink, DL, control information, DCI (266); or
not receiving, via the radio (615), expected DCI.

14. The method of claim 11, wherein inferring the communication failure (210) is based on one or more of:
not receiving, via the radio (615), an expected update;
receiving a dynamic grant; or
determining that a configured grant resource has been reallocated by a base station (204, 610).

15. The method of claim 11, wherein inferring the communication failure (210) is based on assessing channel quality information.
